# EUROPEAN PATENT APPLICATION

(11) **EP 4 498 062 A1**
(43) Date of publication of application: **29.01.2025**
(21) Application number: 24191274.0
(22) Date of filing: 26.07.2024
(51) Int. Cl.: G01N 3/62

(54) **MATERIAL TESTING SYSTEMS WITH SENSOR STATUS TESTS**

(30) Priority: 28.07.2023 US 202363529507 P; 22.07.2024 US 202418779417
(71) Applicant: Illinois Tool Works Inc., Glenview IL 60025 (US)
(72) Inventor: CAESAR, Daniel Vincent, Glenview, 60025 (US); NICOL, Scott, Glenview, 60025 (US); POPE, Mary E., Glenview, 60025 (US); GOLDFARB, Landon Marc, Glenview, 60025 (US); MORSE, Jason, Glenview, 60025 (US)
(74) Representative: HGF

(57) **Abstract**

Described herein are examples of material testing systems that allow for testing of one or more test sensors of a material testing machine. In some examples, such testing may ensure each test sensor is functioning correctly. In some examples, the testing may be conducted manually, periodically, and/or automatically in response to some indication that a test sensor may be malfunctioning. In some examples, further testing using the material testing machine may be prohibited if the test results indicate that one or more of the sensors are malfunctioning. This prohibition may ensure that the tests conducted using the material testing machine remain reliable and usable, rather than being rendered untrustworthy due to malfunctioning test sensors.

## Description

### CROSS REFERENCE TO RELATED APPLICATIONS

This application claims priority to, and the benefit of, U.S. Provisional Application No. 63/529,507 entitled "Material Testing Systems with Sensor Status Tests," filed July 28, 2023, the entire contents of which being hereby incorporated by reference.

### TECHNICAL FIELD

The present disclosure generally relates to material testing systems and, more particularly, to material testing systems with sensor status tests.

### BACKGROUND

Material testing machines are used to test the properties (e.g., tensile/compressive strength) of various material specimens. A sensor of the material testing machine may take measurements during tests of the various material specimens, and the properties of the specimens may be evaluated based on the sensor's measurements.

Limitations and disadvantages of conventional and traditional approaches will become apparent to one of skill in the art, through comparison of such systems with the present disclosure as set forth in the remainder of the present application with reference to the drawings.

### BRIEF SUMMARY

The present disclosure is directed to material testing systems with sensor status tests, substantially as illustrated by and/or described in connection with at least one of the figures, and as set forth more completely in the claims.

These and other advantages, aspects and novel features of the present disclosure, as well as details of an illustrated example thereof, will be more fully understood from the following description and drawings.

### BRIEF DESCRIPTION OF THE DRAWINGS

FIG. 1 shows an example material testing system, in accordance with aspects of this disclosure.
FIG. 2 shows a block diagram of the material testing system of FIG. 1, in accordance with aspects of this disclosure.
FIG. 3 shows a flow diagram illustrating an example material testing workflow of the material testing system of FIGS. 1-2, in accordance with aspects of this disclosure.
FIG. 4 shows a flow diagram illustrating an example test method creation process of the material testing system of FIGS. 1-2, in accordance with aspects of this disclosure.
FIGS. 5a-5f show examples of visual output of a user interface of the material testing system of FIGS. 1-2 during the material testing workflow of FIG. 3, in accordance with aspects of this disclosure.
FIGS. 6a-6b show examples of visual output of the user interface of the material testing system of FIGS. 1-2 during the test method creation process of FIG. 4, in accordance with aspects of this disclosure.
FIG. 7 shows a flow diagram illustrating an example sensor test process of the material testing system of FIGS. 1-2, in accordance with aspects of this disclosure.
FIG. 8 shows an example visual output of the user interface of the material testing system of FIGS. 1-2 during the sensor test process of FIG. 7, in accordance with aspects of this disclosure.

The figures are not necessarily to scale. Where appropriate, the same or similar reference numerals are used in the figures to refer to similar or identical elements. For example, reference numerals utilizing lettering (e.g., grip 124a, grip 124b) refer to instances of the same reference numeral that does not have the lettering (e.g., grips 124).

### DETAILED DESCRIPTION

The present disclosure relates to material testing systems that allow for testing of one or more test sensors of a material testing machine to determine whether the sensors are still working correctly. In some examples, the testing may be conducted manually, periodically, and/or automatically in response to some indication that a test sensor may be malfunctioning. In some examples, further testing using the material testing machine may be prohibited if the test results indicate that one or more of the sensors are malfunctioning. This prohibition may ensure that the tests conducted using the material testing machine remain reliable and usable, rather than being rendered untrustworthy due to malfunctioning test sensors.

Some examples of the present disclosure relate to a material testing system, comprising: a material testing machine, comprising a test sensor, a test actuator, and a test controller configured to control the test actuator; and a computing device configured for communication with the material testing machine, the computing device comprising processing circuitry configured to: execute a sensor test method using the material testing machine, the sensor test method comprising a method for testing the test sensor of the material testing machine, determine whether the test sensor of the material testing machine is operating correctly based on a test result of the sensor test method, and in response to determining the test sensor is not operating correctly, prohibiting a further test method from being executed using the material testing machine.

In some examples, determining whether the test sensor is operating correctly comprises determining whether a measurement of the test sensor during execution of the sensor test method is within a specified tolerance of an expected measurement, the test result comprising the measurement of the test sensor during execution of the sensor test method. In some examples, the computing device further comprises memory circuitry storing a time parameter, the processing circuitry being further configured to: execute the sensor test method again after a time delay in response to determining the test sensor is operating correctly, the time delay being determined based on the time parameter stored in the memory circuitry. In some examples, the sensor test method comprises a first sensor test method, the test result comprises a first test result, the test sensor comprises a first test sensor, the material testing machine further comprising a second test sensor, and the processing circuitry being further configured to: in response to determining the first test sensor is operating correctly, execute a second sensor test method using the material testing machine, and determine whether the second test sensor of the material testing machine is operating correctly based on a second test result of the second sensor test method.

In some examples, the processing circuitry is further configured to: in response to determining the second test sensor is operating correctly, successively execute an additional sensor test method for each additional test sensor of the material testing machine until each additional test sensor has been determined to be operating correctly, or an additional test sensor is determined to be operating incorrectly. In some examples, the system further comprises a user interface configured to: output input prompts regarding the sensor test method, and receive one or more user inputs responding to the input prompts, the processing circuitry being further configured to: identify one or more test parameters of the sensor test method based on the one or more inputs, and generate the sensor test method based on the one or more test parameters. In some examples, the processing circuitry is further configured to determine whether there is an indication that the test sensor of the material testing machine is not operating correctly based on an event record stored in memory circuitry of the computing device, the event record comprising a log of events that occur during setup, execution, or analysis of a test method, wherein the sensor test method is executed in response to determining that there is an indication that the test sensor is not operating correctly.

Some examples of the present disclosure relate to a non-transitory computer readable medium comprising machine readable instructions which, when executed by a processor, causes the processor to: execute a sensor test method using a material testing machine, the material testing machine comprising a test sensor, a test actuator, and a test controller configured to control the test actuator, the sensor test method comprising a method for testing the test sensor of the material testing machine; determine whether the test sensor of the material testing machine is operating correctly based on a test result of the sensor test method; and in response to determining the test sensor is not operating correctly, prohibit a further test method from being executed using the material testing machine.

In some examples, determining whether the test sensor is operating correctly comprises determining whether a measurement of the test sensor during execution of the sensor test method is within a specified tolerance of an expected measurement, the test result comprising the measurement of the test sensor during execution of the sensor test method. In some examples, the non-transitory computer readable medium further comprises a time parameter, the machine readable instructions, when executed by the processor, further causing the processor to execute the sensor test method again after a time delay in response to determining the test sensor is operating correctly, the time delay being determined based on the time parameter. In some examples, the sensor test method comprises a first sensor test method, the test result comprises a first test result, the test sensor comprises a first test sensor, the material testing machine further comprising a second test sensor, and the machine readable instructions, when executed by the processor, further causing the processor to: in response to determining the first test sensor is operating correctly, execute a second sensor test method using the material testing machine; and determine whether the second test sensor of the material testing machine is operating correctly based on a second test result of the second sensor test method.

In some examples, the machine readable instructions, when executed by the processor, further cause the processor to: in response to determining the second test sensor is operating correctly, successively execute an additional sensor test method for each additional test sensor of the material testing machine until each additional test sensor has been determined to be operating correctly, or an additional test sensor is determined to be operating incorrectly. In some examples, the machine readable instructions, when executed by the processor, further cause the processor to: output, via a user interface, input prompts regarding the sensor test method; receive, via the user interface, one or more user inputs responding to the input prompts; identify one or more test parameters of the sensor test method based on the one or more inputs; and generate the sensor test method based on the one or more test parameters. In some examples, the machine readable instructions, when executed by the processor, further cause the processor to: determine whether there is an indication that the test sensor of the material testing machine is not operating correctly based on an event record stored in memory circuitry of the computing device, the event record comprising a log of events that occur during setup, execution, or analysis of a test method, wherein the sensor test method is executed in response to determining that there is an indication that the test sensor is not operating correctly.

Some examples of the present disclosure relate to a method, comprising: executing a sensor test method using a material testing machine, the material testing machine comprising a test sensor, a test actuator, and a test controller configured to control the test actuator, the sensor test method comprising a method for testing the test sensor of the material testing machine; determining, via processing circuitry of a computing device, whether the test sensor of the material testing machine is operating correctly based on a test result of the sensor test method; and in response to determining the test sensor is not operating correctly, prohibiting a further test method from being executed using the material testing machine.

In some examples, determining whether the test sensor is operating correctly comprises determining whether a measurement of the test sensor during execution of the sensor test method is within a specified tolerance of an expected measurement, the test result comprising the measurement of the test sensor during execution of the sensor test method. In some examples, the method further comprises executing the sensor test method again after a time delay in response to determining the test sensor is operating correctly, the time delay being determined based on a time parameter stored in memory circuitry of the computing device. In some examples, the sensor test method comprises a first sensor test method, the test result comprises a first test result, the test sensor comprises a first test sensor, the material testing machine further comprising a second test sensor, and the method further comprising: in response to determining the first test sensor is operating correctly, executing a second sensor test method using the material testing machine; and determining, via the processing circuitry, whether the second test sensor of the material testing machine is operating correctly based on a second test result of the second sensor test method.

In some examples, the method further comprises in response to determining the second test sensor is operating correctly, successively executing an additional sensor test method for each additional test sensor of the material testing machine until each additional test sensor has been determined to be operating correctly, or an additional test sensor is determined to be operating incorrectly. In some examples, the method further comprises determining, via the processing circuitry, whether there is an indication that the test sensor of the material testing machine is not operating correctly based on an event record stored in memory circuitry of the computing device, the event record comprising a log of events that occur during setup, execution, or analysis of a test method, wherein the sensor test method is executed in response to determining that there is an indication that the test sensor is not operating correctly.

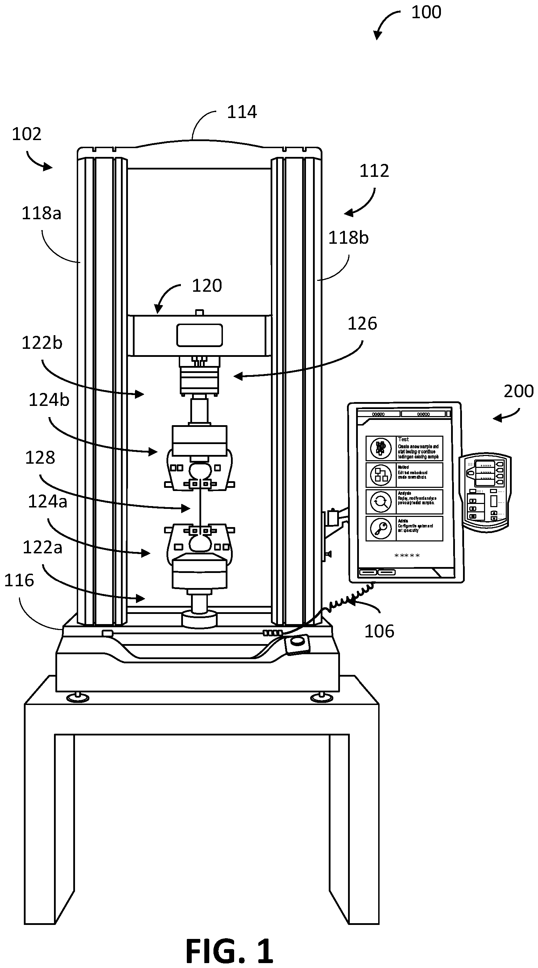

FIG. 1 shows an example material testing system 100. As shown, the material testing system 100 includes a material testing machine 102 (also known as a universal testing machine), and a computing system 200 connected to the material testing machine 102 through cable 106. While shown as being physically connected, in some examples, the connections may be wireless rather than wired.

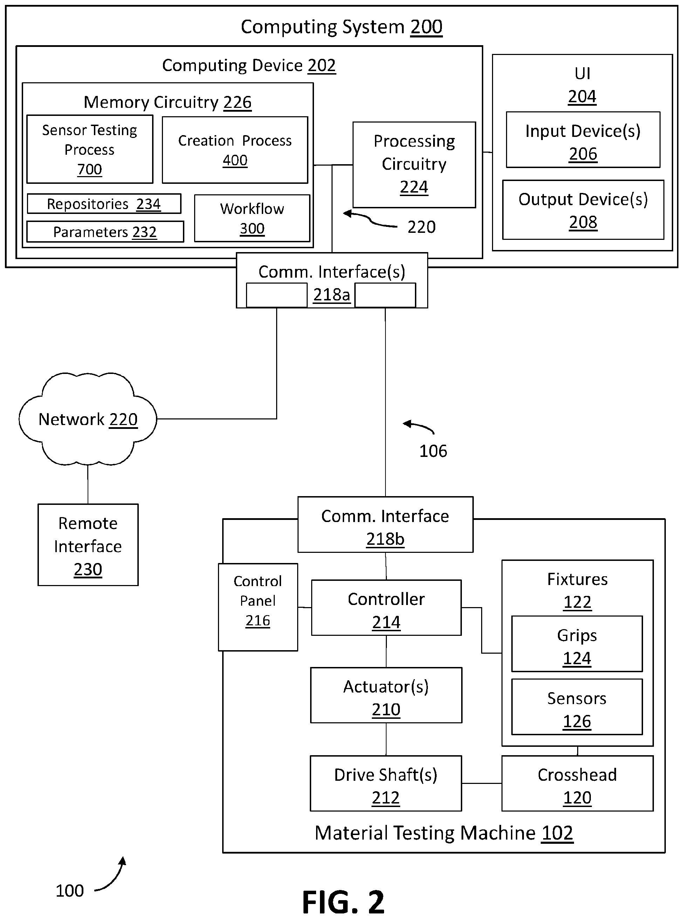

In the example of FIG. 1, the material testing machine 102 includes a frame 112. In some examples, the frame 112 provides rigid structural support for the other components of the material testing machine 102. As shown, the frame 112 comprises a top plate 114 and a bottom base 116 connected by two columns 118. In some examples, the columns 118 of the frame 112 may house guide rails and/or drive shafts 212 of the material testing machine 102 (see, e.g., FIG. 2).

In the example of FIG. 1, a movable crosshead 120 extends between the columns 118. In some examples, the movable crosshead 120 may be connected to the guide rails and/or drive shafts 212 housed in the columns 118, and/or configured to move toward and/or away from the base 116 through (e.g., motorized) actuation of the drive shaft(s) 212. While one movable crosshead 120 is shown in the example of FIG. 1, in some examples, the material testing machine 102 may have multiple movable crossheads 120, and/or other movable members.

In the example of FIG. 1, a fixture 122 is attached to the bottom base 116 of the frame 112, as well as to the movable crosshead 120. As shown, the lower fixture 122a includes a grip 124a, while the upper fixture 122b includes both a test sensor 126 and a grip 124b. While one test sensor 126 and two grips 124 are shown in the example of FIG. 1, in some examples, the testing machine 102 may include more or fewer test sensors 126 and/or grips 124.

In the example of FIG. 1, the grips 124 are holding a test specimen 128. While shown as a (e.g., steel) rope, in some examples, the test specimen 128 may be some other type of material and/or component. While shown as being rope holders, in some examples, the grip 124a and/or grip 124b may alternatively, or additionally, be configured as a bolt holder, wedge grip, side acting grip, manual grip, roller grip, capstan grip, and/or syringe holder. In some examples, one or both of the grips 124 may be replaced by a compression platen configured to compress the test specimen 128.

In the example of FIG. 1, the test sensor 126 is connected to the grip 124, such that the test sensor 126 can measure forces acting on the grip 124 (and/or specimen 128, crosshead 120, etc.). In some examples, the test sensor 126 may be a load cell and/or a transducer. In some examples, the test sensor 126 may be some other type of sensor.

In some examples, the material testing machine 102 may be configured for static mechanical testing. For example, the material testing machine 102 may be configured for compression strength testing, tension strength testing, shear strength testing, bend strength testing, deflection strength testing, tearing strength testing, peel strength testing (e.g., strength of an adhesive bond), torsional strength testing, and/or any other compressive and/or tensile testing. Additionally or alternatively, the material testing machine 102 may be configured to perform dynamic testing.

In some examples, the material testing machine 102 is configured to interface with the computing system 200 to conduct a test method. For example, the computing system 200 may communicate with a controller 214 (see, e.g., FIG. 2) of the material testing machine 102 to conduct the test method. In some examples, an operator (or other user) may first use the computing system 200 to setup the test method, then use the computing system 200 to execute the test method, and finally use the computing system 200 to analyze the results of the test method.

FIG. 2 is a block diagram showing details of the computing system 200, as well as additional details of the material testing machine 102. In the example of FIG. 2, the example material testing machine 102 includes one or more actuators 210 connected with one or more drive shafts 212. In some examples, the actuators 210 may be used to provide force to, and/or induce motion of, the drive shafts 212. In some examples, the actuators 210 may include electric motors, pneumatic actuators, hydraulic actuators, piezoelectric actuators, relays, and/or switches.

The drive shafts 212 are further shown connected to the movable crosshead 120, such that movement of the drive shaft(s) 212 via the actuator(s) 210 will result in movement of the movable crosshead 120. While termed drive shafts 212 in the example of FIG. 2, in some examples, the drive shafts 212 may be some other mechanical means of moving the movable crosshead 120 though inducement by the actuator(s) 210.

The example material testing machine 102 further includes a controller 214 in electrical communication with the actuator(s) 210. In some examples, the controller 214 may include processing circuitry and/or memory circuitry. In some examples, the controller 214 may be configured to control the material testing machine 102 based on one or more commands, control inputs, and/or test parameters. In some examples, the controller 214 may be configured to translate commands, control inputs, and/or test parameters (e.g., received from the computing system 200) to appropriate (e.g., electrical) signals that may be delivered to the actuator(s) 210, thereby controlling operation of the material testing machine 102 (e.g., via the actuator(s) 210). For example, the controller 214 may provide one or more signals(s) commanding more or less electrical power be provided to the actuator(s) 210, to thereby increase or decrease applied force.

In the example of FIG. 2, the controller 214 is further in electrical communication with the fixtures 122 (e.g., the grips 124 and test sensors 126). In some examples, the controller 214 may be configured to translate commands, control inputs, and/or test parameters (e.g., received from the computing system 200) to appropriate (e.g., electrical) signals that may be delivered to the grips 124, to thereby control (e.g., grip or release) operation of the grips 124. In some examples, the controller 214 may be configured to translate commands, control inputs, and/or parameters (e.g., received from the computing system 200) to appropriate (e.g., electrical) signals that may be delivered to the sensor(s) 126, to thereby control operation of the sensor(s) 126. In some examples, the controller 214 may be configured to translate measurement data received from the sensor(s) 126, and/or send measurement data to the computing system 200.

The example controller 214 is further in electrical communication with a control panel 216 of the material testing machine 102. In some examples, the control panel 216 may include one or more input devices (e.g., buttons, switches, slides, knobs, microphones, dials, and/or other electromechanical input devices). In some examples, the control panel 216 may be used by an operator to directly control the material testing machine 102. In some examples, the controller 214 may be configured to translate commands, control inputs, and/or test parameters received via the control panel 216 to appropriate (e.g., electrical) signals that may be delivered to the actuator(s) 210 and/or grip(s) 124 to control the material testing machine 102.

The controller 214 is also shown in electrical communication with a network interface 218b of the material testing machine 102. In some examples, the network interface 218b includes hardware, firmware, and/or software to connect the material testing machine 102 to a complementary network interface 218a of the computing system 200. In some examples, the controller 214 may receive information (e.g., commands) from the computing system 200 through the network interfaces 218, and/or send information (e.g., measurement data from sensor(s) 126) to the computing system 200 through the network interfaces 218.

In the example of FIG. 2, the computing system 200 includes a computing device 202 and a user interface (UI) 204 interconnected with one another. As shown, the UI 204 may include one or more input devices 206 configured to receive inputs from a user, and one or more output devices 208 configured to provide outputs to the user.

In some examples, the one or more input devices 206 may comprise one or more touch screens, mice, keyboards, buttons, switches, slides, knobs, microphones, dials, and/or other input devices 206. In some examples, the one or more output devices 208 may comprise one or more display/touch screens, speakers, lights, haptic devices, and/or other output devices 208. In some examples, the output device(s) 208 (e.g., a display screen) of the Ul 204 may output one or more representations of a material testing workflow 300 configured to guide a user through setup, execution, and/or analysis of a test method conducted by the material testing machine 102. In some examples, the output device(s) 208 (e.g., a display screen) of the UI 204 may output one or more representations of a test method creation process 400 configured to assist a user in easily and/or quickly generating a test method and/or material testing workflow 300.

In the example of FIG. 2, the example computing device 202 includes network interfaces 218a. As shown, one network interface 218a is in communication with the network interface 218b of the material testing machine 102 through cable 106. As shown, the computing device 102 further includes a network interface 218a in communication with a network 220 (e.g., the Internet). In the example of FIG. 2, the computing device 202 is in communication with a remote interface 230 through the network 220 and network interface 218a. As shown, the network interfaces 218a are electrically connected to a common electrical bus 220 of the computing device 202.

The computing device 202 further includes processing circuitry 224 connected to the common electrical bus 220. In some examples, the processing circuitry 224 may comprise one or more processors. In some examples, the processing circuitry 224 is configured to process information received from the UI 204, data importation device(s) 108, and/or material testing machine 102. In some examples, the processing circuitry 224 is configured to transmit (e.g., via network interface(s) 218a) commands and/or test parameters to the material testing machine 102. In some examples, the processing circuitry 224 is configured to output information to an operator through the UI 204. In some examples, the processing circuitry 224 is configured to execute machine readable instructions stored in memory circuitry 226.

The example computing device 202 further includes memory circuitry 226 connected to the common electrical bus 220. As shown, the memory circuitry 226 includes several parameters 232 (and/or parameter values), one or more data repositories 234, a material testing workflow 300, a test method creation process 400, and a sensor testing process 700.

In some examples, the data repositories 234 may comprise several different data structures (e.g., databases, look up table, etc.). The data repositories 234 may store both historical data (e.g., prior workflows 300, test methods, parameters 232, test results, reports, prompts 602, user inputs, etc.) and current data (e.g., mappings between user inputs and parameters 232). In some examples, the historical data may be associated with timestamps and/or other data (e.g., with similar timestamps). Though shown as part of the memory circuitry 226 of the computing device 202 in the example of FIG. 2, in some examples, the repositories 234 may be separate from the computing device 202, and/or in communication with the computing device 202 (e.g., via a network interface 218a).

While shown as part of the memory circuitry 226 in the example of FIG. 2, in some examples, the material testing workflow 300, test method creation process 400, and/or sensor testing process 700 may be implemented using discrete circuitry (e.g., of the processing circuitry 224). In some examples, the material testing workflow 300, test method creation process 400, and/or sensor testing process 700 are implemented using non-transitory machine readable instructions stored in the memory circuitry 226.

In some examples, the processing circuitry 224 is configured to execute the machine readable instructions of the material testing workflow 300 to guide a user through setup, execution, and/or analysis of a test method of the material testing machine 102. In some examples, the setup (and/or creation) of the test method may involve setting values for several (e.g., test, sample, analysis, etc.) parameters 232 that define the test method and/or analysis of the tests results. In some examples, the UI 204 is configured to show (and/or otherwise output) one or more workflow screens 500 that show and/or allow a user to manually set parameters 232 during execution of the material testing workflow 300.

In some examples, during the sensor testing process 700, one or more sensor test methods for testing the test sensor(s) 126 of the material testing machine 102 are setup and/or executed. In some examples, the test method(s) may be executed manually (e.g., via the material testing workflow 300). In some examples, the test method(s) may be executed automatically, such as, for example, in response to expiration of a particular time limit and/or an indication that one or more of the sensors 126 are malfunctioning. In some examples, further test methods (e.g., for testing specimens 128) may be prohibited from executing if the test results of the sensor test method(s) indicate that one or more of the sensors 126 are malfunctioning. In some examples, the prohibition may continue until the test results of the sensor test method(s) indicate that all of the test sensors 126 are functioning correctly.

In some examples, during the test method creation process 400, the computing device 202 is configured to receive input from a user (e.g., via the UI 204), and use the input to generate and/or set the (e.g., test, sample, analysis, etc.) parameters 232 that define, setup, and/or create the test method. In some examples, the number of prompted user inputs may be far fewer than the number of parameters 232, and/or a single user input may serve as the basis for setting several different parameters 232. Various analyses may also be used optimize the parameters 232 to comply with certain standards, save time, and/or reduce the potential for error. As the number of user input prompts is far fewer than the number of parameters 232, the process of configuring the test method (and/or test result analysis) may be greatly shortened and/or simplified as compared to manual configuration using the material testing workflow 300.

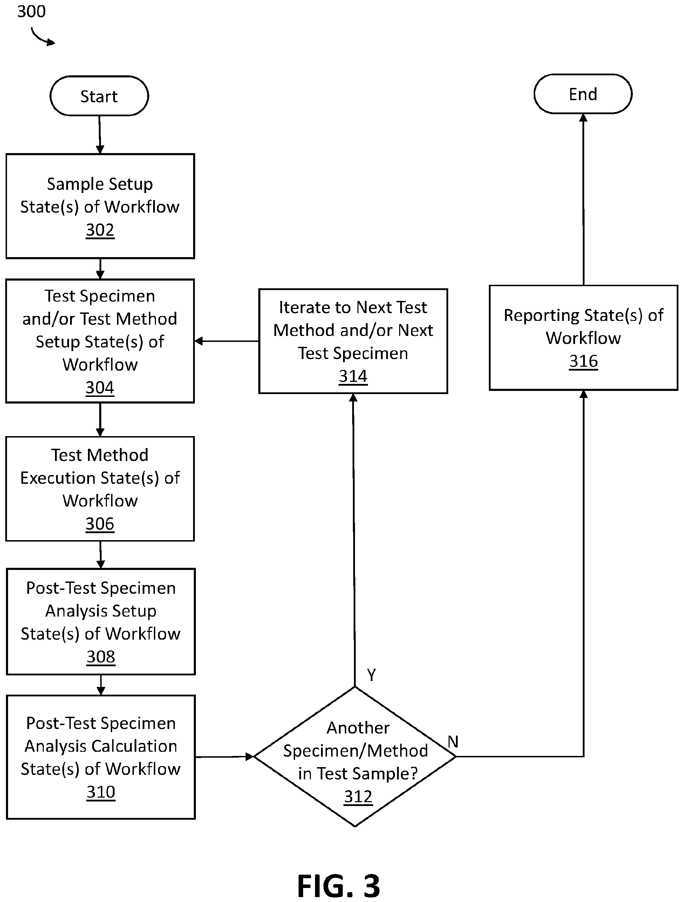

FIG. 3 is a flow diagram showing example workflow states of an example material testing workflow 300. While a specific order of workflow states are shown, in some examples, user progression through the material testing workflow 300 may be customizable such that additional and/or fewer workflow states may be implemented in operation. Additionally, numerous alternative progressions through a workflow 300 may be possible.

In some examples, before using and/or progressing through the material testing workflow 300, a user may be required to login and/or be authenticated. In some examples, user authentication may occur via biometric (e.g., fingerprint, retinal, face, etc.), close proximity communication (e.g., RFID, NFC, Bluetooth, barcode etc.), cloud based (e.g., Oauth, Google, Single sign on), passkey, and/or multi-factor authentication.

While the material testing workflow 300 is sometimes described below as conducting certain actions for the sake of understanding, it should be understood that one or more of the above described components of the material testing system 100 (e.g., the processing circuitry 224, UI 204, etc.) may undertake the actions on behalf (and/or according to instructions) of the material testing workflow 300.

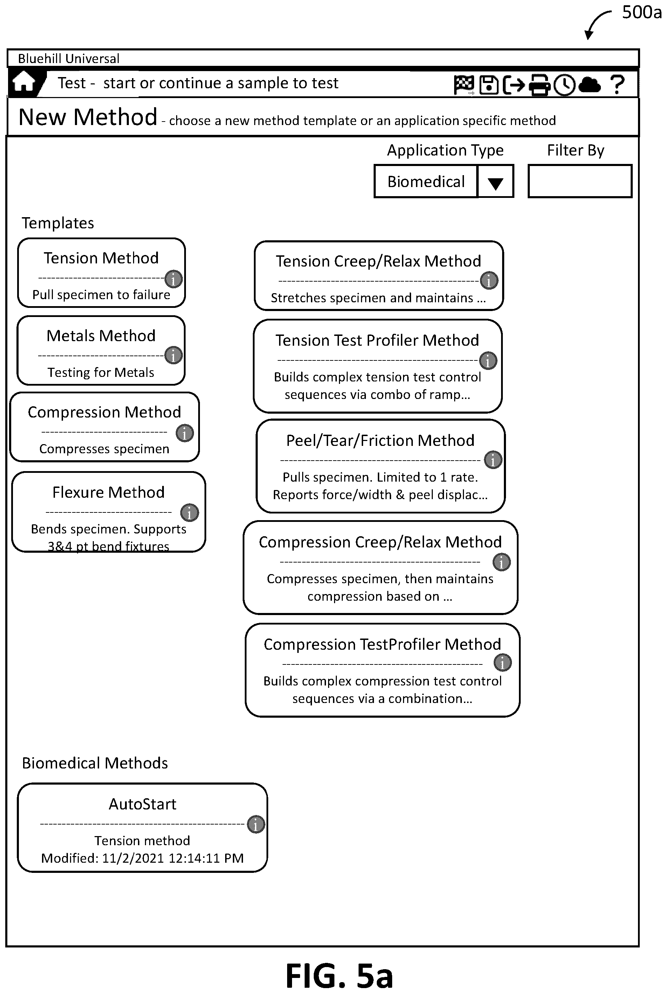

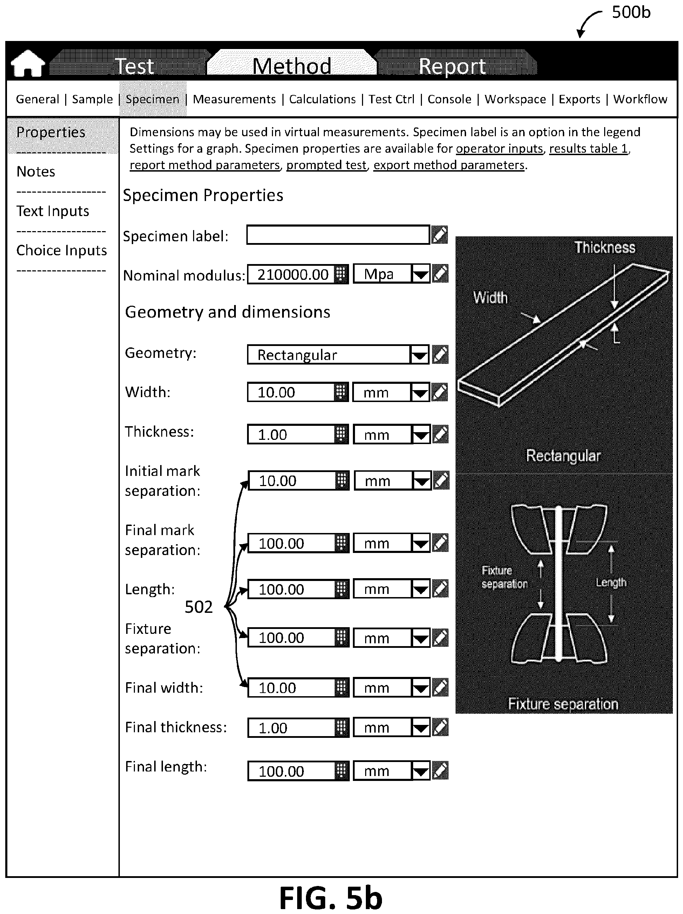

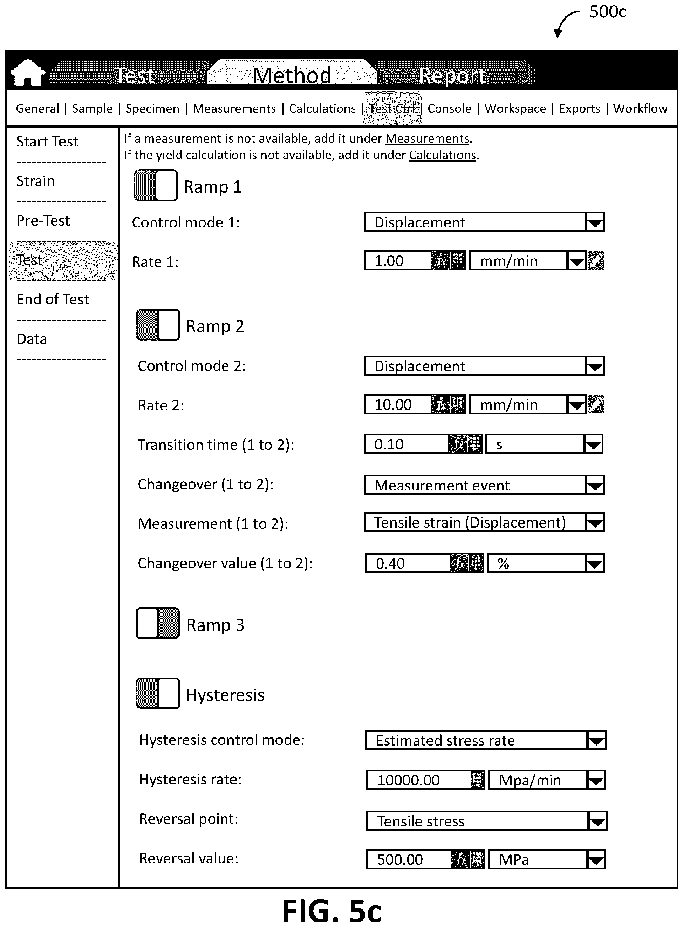

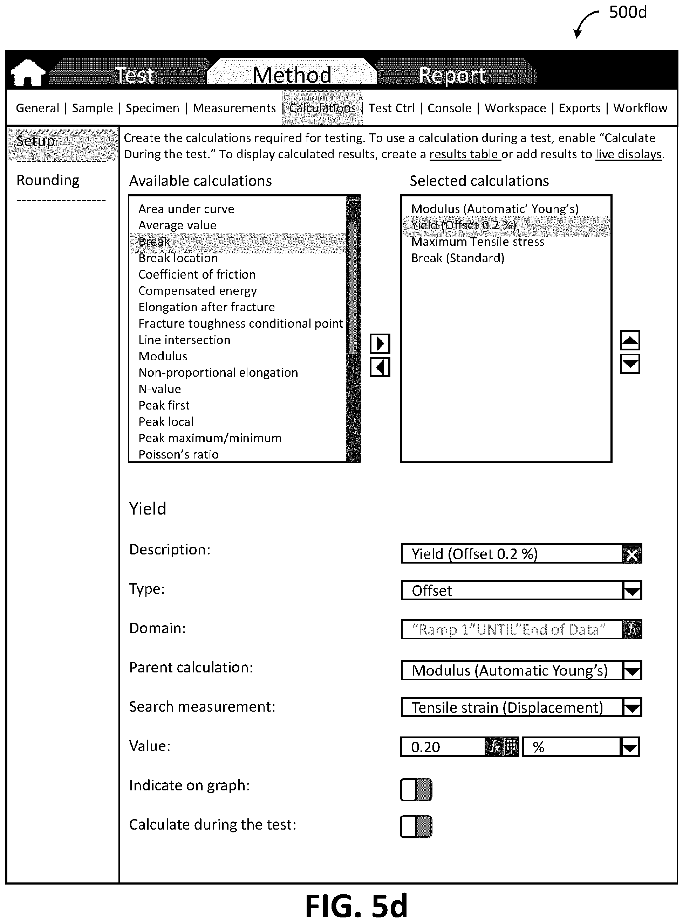

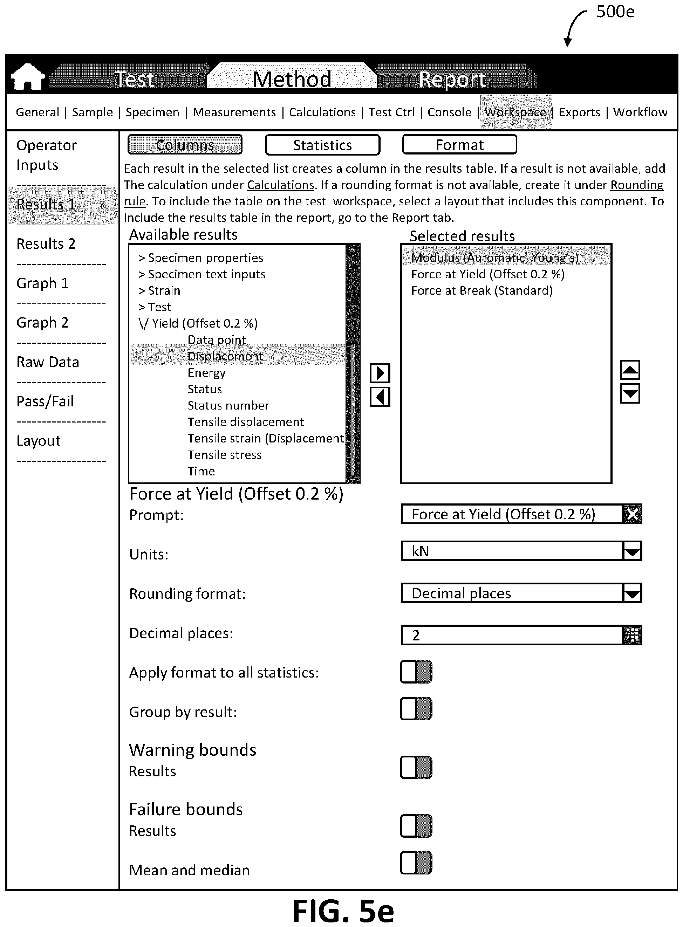

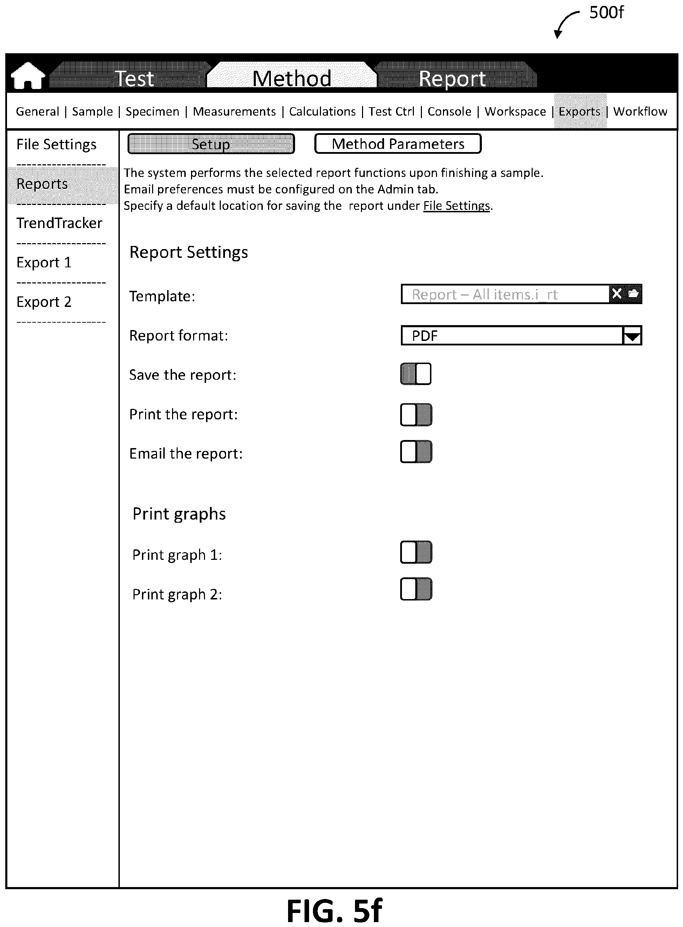

In some examples, the material testing workflow 300 progresses through the workflow states to guide a user through setup, execution, and analysis of a test method of the material testing machine 102. In some examples, a particular workflow state may be associated with an output of the UI 204 (e.g., a workflow screen 500, see FIG. 5). Some of the preliminary workflow states may also be associated with one or more parameters 232 (e.g., shown and/or set via the workflow screens 500). In some examples, the parameter(s) 232 may be used to define and/or execute the test method, and/or analyze results of the test method.

In the example of FIG. 3, the first workflow state is a sample setup state 302 (and/or a plurality of sample setup states 302). During the example sample setup state(s) 302, the material testing workflow 300 prompts an operator for sample parameters 232 comprising information pertaining to a set of specimens 128 of a sample, as well as (e.g., universal) test parameters 232 comprising information pertaining a set of test methods that will be used to test the specimens 128 of the sample. The information prompted for (and/or collected) during the sample setup state(s) 302 may be information that is applicable to all the specimens 128 and test methods, such as, for example, a date the test(s) will be run, a date the specimens 128 were manufactured/shipped/packaged, identification information (e.g., number, name, etc.) of the operator, identification information (e.g., number(s), name(s), etc.) of the fixture(s), and/or other information relevant to all the tests of all the specimens 128.

In the example of FIG. 3, the sample setup state 302 is followed by one or more test specimen and/or test method setup states 304. During the test specimen and/or test method setup state(s) 304, the material testing workflow 300 prompts an operator for (and/or collects) specimen parameters 232 comprising information pertaining to a particular specimen 128 of a sample, and/or test parameters 232 comprising information pertaining a particular test method that will be used to test the particular specimen 128.

For example, the test parameters 232 may include a date the test will be run, identification information of the test (e.g., number, name, type, description, etc.), target start/end positions of grip(s) 124, target start/end positions of the crosshead 120, target distance/direction moved by crosshead 120, target speed of movement of crosshead 120, expected result(s) of test (e.g., position/type of break, distance moved before break, force applied before break, post-test characteristics of sample, etc.), time(s) when sensor(s) 126 should take measurement(s), and/or other relevant to a particular test method. As another example, specimen parameters 232 may include, a date the specimen 128 was manufactured/shipped/packaged, identification information of the specimen 128 (e.g., number, name, description, etc.), pre-test characteristics of the specimen 128 (e.g., measurements/dimensions, material type, weight, color, shape, modulus, ultimate tensile strength, etc.), and/or other information relevant to a particular specimen.

FIGS. 5a-5c show example workflow screens 500a-c that might be presented via the Ul 204 during the test specimen and/or test method setup state(s) 304. In the example of FIG. 5a, the workflow screen 500a presents several different types of test methods that may be selected. The workflow screen 500b in FIG. 5b presents several different specimen parameters 232 that may be specified. FIG. 5c shows an example workflow screen 500c showing several test parameters 232 that may be specified.

The workflow screens 500a-c have several input fields 502 where (e.g., specimen/test parameter 232) information may be shown and/or entered. And indeed, several of the input fields 502 already have information entered therein. In some examples, each input field 502 may correspond to a sample parameter 232 and/or test parameter 232, and the information present therein being used to set the sample parameter 232 and/or test parameter 232.

In the example of FIG. 3, the test specimen and/or test method setup state 304 is followed by a test method execution state 306 (and/or test method execution states 306). During the test method execution state(s) 306, the computing device 202 communicates with the material testing machine 102 (e.g., via network interfaces 218) to execute the test method on the test specimen 128. In some examples, execution of the test method may involve using the material testing machine 102 according to the (e.g., test/specimen/sample) parameters 232 set during the test specimen and/or test method setup state(s) 304 and/or sample setup state(s) 302. For example, the processing circuitry 224 of the computing device 202 may determine and/or send one or more parameters 232 and/or commands to the material testing machine 102, and the controller 214 of the material testing machine 102 may control the actuator(s) 210 of the material testing machine 102 to execute the test method in accordance with the command(s) and/or parameter(s) 232. In some examples, execution of the test method (e.g., via the test method execution state(s) 306) may result in some movement and/or operation of the material testing machine 102, some force applied to the specimen 128, and/or some (e.g., force) measurement(s) of the test sensor(s) 126 over some time period.

In the example of FIG. 3, the test method execution state 306 is followed by one or more post-test analysis setup states 308. During the post-test analysis setup state(s) 308, the material testing workflow 300 prompts an operator for (and/or collects) information pertaining to an analysis of the test method that was executed during the test method execution state 306, and/or one or more reports of that analysis.

For example, the information prompted for (and/or collected) during the post-test specimen analysis setup state(s) 308 may include post-test characteristics of the specimen 128 (e.g., specimen parameters 232), actual parameters of the test (e.g., test parameters 232), actual results of the test (e.g., test parameters 232), test result report format(s) (e.g., report parameters 232), and/or other information relevant to an analysis of the test method and/or test sample. As another example, the information prompted for (and/or collected) during the post-test specimen analysis setup state(s) 308 may include calculation analysis parameters 232, such, for example, as one or more algorithms that may be used to evaluate results of the test method (and/or produce additional test results), and/or one or more thresholds and/or threshold ranges (e.g., by which test results may be adjudged to determine whether the specimen 128 passed or failed the test). While shown as a separate state in FIG. 3, in some examples, the post-test specimen analysis setup state(s) 308 may be integrated into the test specimen and/or test method setup state(s) 304.

FIGS. 5d-5f show workflow screens 500d-f that might be presented via the UI 204 during the post-test specimen analysis setup state(s) 308. The example workflow screens 500d and 500e in FIGS. 5d and 5e shows various calculation analysis parameters 232 that might be set during the post-test specimen analysis setup state(s) 308. FIG. 5f shows an example workflow screen 500f with various report parameters 232 that might be set to configure a report during the post-test specimen analysis setup state(s) 308.

In the example of FIG. 3, the one or more post-test specimen analysis setup states 308 are followed by one or more post-test specimen analysis calculation states 310 of the material testing workflow 300. During the post-test specimen analysis calculation state(s) 310, the processing circuitry 224 of the computing device 202 may perform one or more calculations based on the information collected during the previous post-test specimen analysis setup state(s) 308 (e.g., the calculation analysis parameters 232), as well as the results of the test method. In some examples, the results of the test method may include measurements of force and/or load exerted on a specimen 128 (and/or measured by the test sensor 126) over a period of time (e.g., of the test method). In some examples, during the post-test specimen analysis calculation state(s) 310, the processing circuitry 224 of the computing device 202 may additionally (or alternatively) perform one or more calculations based on information about the specimen and/or test method (e.g., sample/specimen/test parameters 232).

For example, the processing circuitry 224 may estimate a strength, reliability, quality, grade, resiliency, and/or other characteristic of the specimen 128 using the test results and/r the sample, specimen, test, and/or calculation analysis parameters 232. As another example, the processing circuitry 224 may hypothesize about the structure and/or composition of the specimen 128 using the test results and/or the sample, specimen, test, and/or calculation parameters 232. As another example, the processing circuitry may hypothesize about the future performance of the specimen 128 using the test results and/or the sample, specimen, test, and/or calculation analysis parameters 232.

In the example of FIG. 3, the material testing workflow 300 repeats states 304-310 for all the test methods and/or test specimens of the test sample (setup at state 302). As shown, after state 310, the material testing workflow 300 iterates to the next test method and/or test specimen at state 314 (provided there is another test method or test specimen), then returns to state 304. Once states 304-310 have been completed for all the test methods and/or test specimens of the test sample, the material testing workflow 300 moves through one or more reporting state(s) 316, where the material testing workflow 300 may provide reports on the results and/or analysis of the test sample according to operator specifications. In some examples, one or more reports may be provided over the network 220 to the remote interface 230.

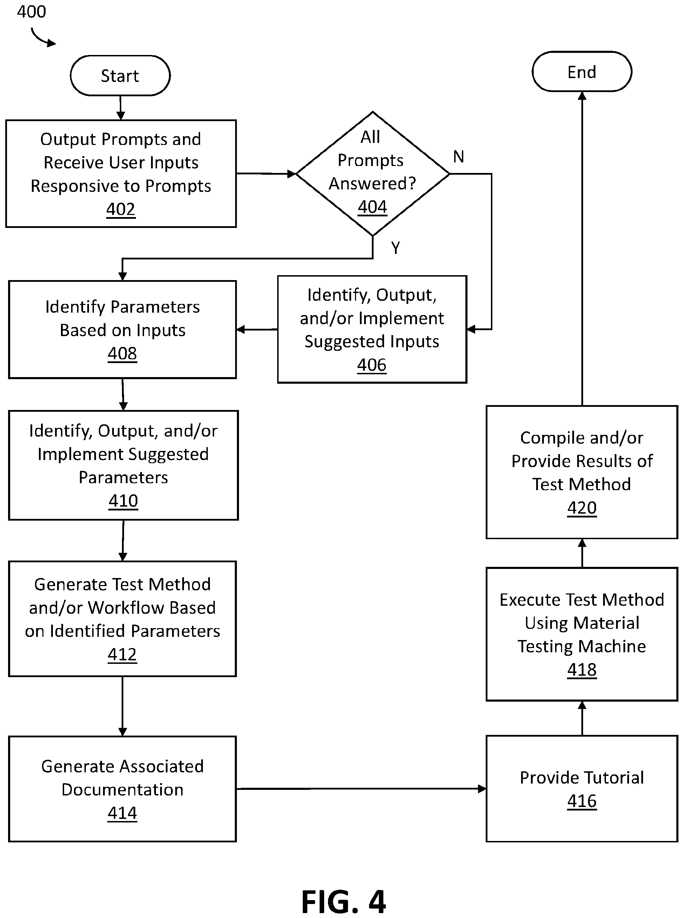

FIG. 4 is a flow diagram showing example operation of the test method creation process 400. In some examples, during the test method creation process 400, the computing device 202 is configured to receive user input (e.g., via the UI 204), and use the user input to generate and/or set the (e.g., test, sample, analysis, etc.) parameters 232 that would otherwise be set through the material testing workflow 300. In some examples, before using and/or progressing through the test method creation process 400, a user may be required to login and/or be authenticated, as discussed above. While the test method creation process 400 is sometimes described below as conducting certain actions for the sake of understanding, it should be understood that one or more of the above described components of the material testing system 100 (e.g., the processing circuitry 224, UI 204, etc.) may undertake the actions on behalf (and/or according to instructions) of the test method creation process 400.

In the example of FIG. 4, the test method creation process 400 begins at block 402, where the test method creation process 400 outputs (e.g., via the UI 204) one or more questions and/or other prompts to elicit input from an operator and/or other user. In some examples, the questions and/or other prompts may be seek to obtain input regarding a user's testing intentions, desires, targets, and/or specimens that can be translated into parameters 232 defining a test method and/or test result analysis. As shown, at block 402, the test method creation process 400 also receives the user inputs the prompt(s) sought to elicit.

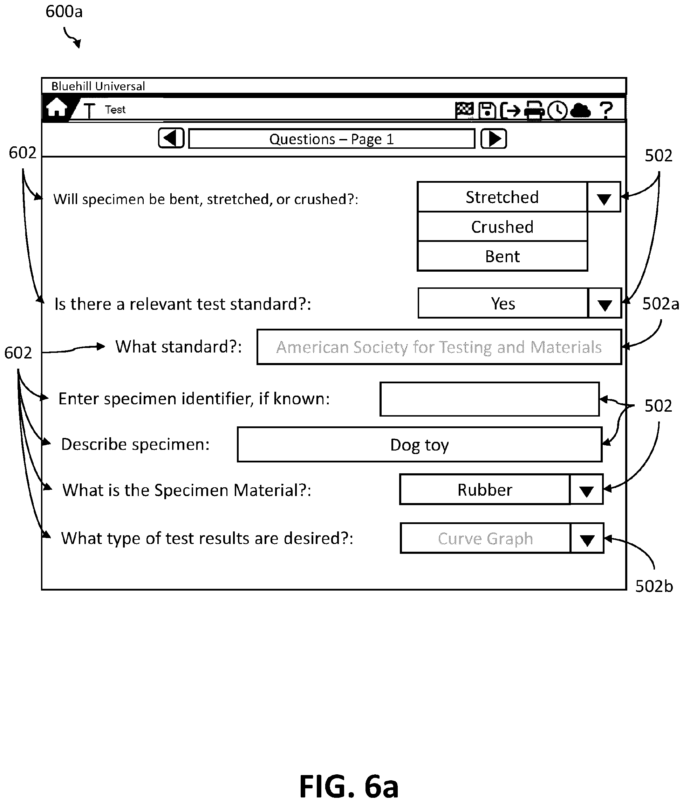

FIGS. 6a-6b show examples of creation screens 600 that might be shown during block 402 (and/or other blocks) of the test method creation process 400. In the example of FIGS. 6a-6b, the creation screen 600a includes several prompts 602, each of which is adjacent an input field 502. As shown, some of the input fields 502 comprise dropdown menus with several options from which to choose, while other input fields 502 allow for free form text entry. While most of the input fields 502 have some information entered, at least one input field 502 remains empty.

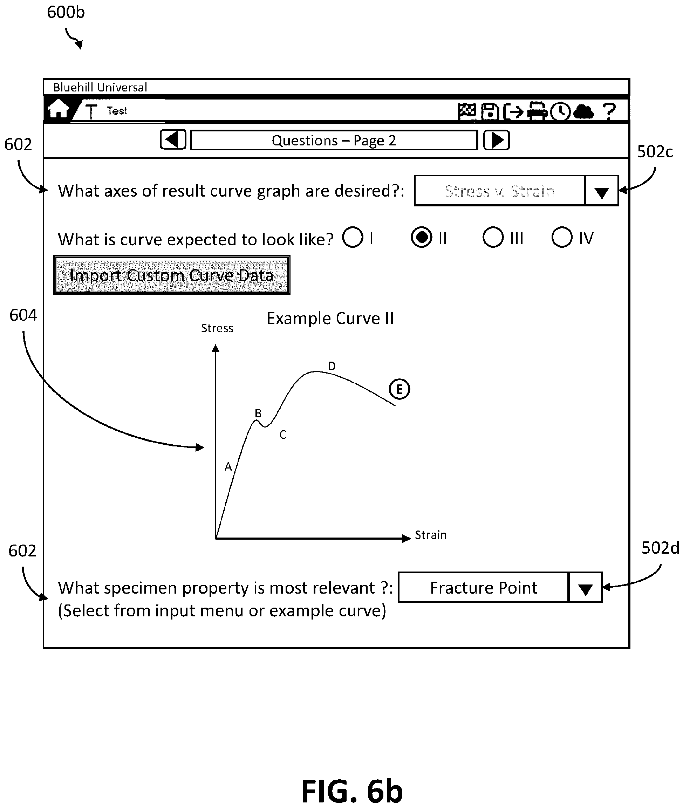

The example workflow screen 600b in FIG. 6b further shows an example result curve graph 604 that may additionally be used to accept input from a user (e.g., via cursor). For example, the user may interact with the graph 604 to select a particular portion (e.g., A, B, C, D, or E). In some examples, selection of a particular portion of the result curve graph 604 may select a particular option from an input field 502. In the example of FIG. 6b, the user has selected the E portion of the result curve graph 604, resulting in selection of "Fracture Point" in response to the prompt 602 regarding most relevant property of the specimen 128 (e.g., as opposed to resilience, yield strength, ultimate strength, etc.). In some examples, different selections (e.g., via graph 604 or input field 502d) regarding most relevant property of the specimen 128 may result in different calculation analysis parameters 232 being selected by the test method creation process 400.

In the example of FIG. 4, the test method creation process 400 determines whether any input fields 502 from block 402 remain empty and/or unset at block 404 (e.g., after an indication is received indicating the use has finished entering information). If there remain empty and/or unset input fields 502, the test method creation process 400 identifies one or more suggested inputs to the empty input fields 502 at block 5406.

In some examples, the identification of suggested inputs may involve an analysis of prior inputs (e.g., stored in the data repositories 234) to identify the most recent and/or most used input(s) for a particular (e.g., empty) input field 502. In some examples, the test method creation process 400 may additionally (or alternatively) consider other factors, such as, for example, the logged in user, and/or the material testing machine 102 being used (e.g., to determine the most recent/used input for a particular user and/or machine 102). For example, a particular material testing machine 102 (and/or fixture 122, grip 124, sensor 126, etc.) may always be used for compression, in which case the test method creation process 400 may suggest "crushed" in answer to the question "will the specimen be bent, stretched, or crushed." In some examples, the test method creation process 400 may additionally consider other prior inputs (e.g., to determine the most recent/used input when a particular pattern of inputs is present).

In some examples, a more complex analysis may be used, where the test method creation process 400 attempts to identify, using prior input data (e.g., stored in the repositories 234), one or more input patterns that match the current pattern of inputs. In some examples, one or more machine learning algorithms (e.g., cluster analysis, K-nearest neighbor, etc.) may be used for the pattern matching. This pattern matching may then be used to identify an input to suggest.

In some examples, the suggested input identified at block 406 may be output to the user via the UI 204. In some examples, the test method creation process 400 may give an explanation as to why the suggestion is being made. In some examples, the suggested input may be implemented and/or used as the actual input (e.g., in response to an input received via the UI 204 accepting the suggestion). While block 406 is described as occurring after user input is completed at block 402, in some examples, the suggestion(s) of block 406 may occur while a user is entering input, so that the user can see suggested inputs prior to actually choosing an input themselves.

FIGS. 6a-6b, for example, shows an example of suggested inputs being presented on the creation screen 600a. In the example of FIG. 6, the suggested inputs are the gray inputs in the input fields 502a and 502b. In some examples, multiple input suggestions may be made. For example, both the American Society for Testing and Materials (ASTM) and the International Organization for Standardization (ISO) may be suggested for input field 502a, with the user being allowed to choose one (or both) of the suggestions. In some examples, a single input suggestion may be made from several possible choices. For example, in the example of FIG. 6b, the input field 502c shows a suggestion of using stress and strain axes rather than other potential axes choices (e.g., load and displacement, load and time, etc.).

In the example of FIG. 4, after block 406, the test method creation process 400 proceeds to block 408, where the test method creation process 400 identifies one or more parameters 232 (and/or parameter values) of the material testing workflow 300 based on the input(s) received at blocks 402 and/or 406. In some examples, this identification may involve a translation of a single input into multiple parameters 232 (and/or parameter values), such that the all the parameters 232 may be set with fewer inputs than would be needed to set each parameter 232 individually. In some examples, the translation may use one or more data structures (e.g., of the data repositories 234) that map inputs to parameters 232. Such data structures may be particularly fruitful where there are a limited number of known inputs that might be entered in response to a particular prompt 602, and/or where dropdown menu input fields 502 are used (e.g., providing a limited number of known inputs as options). In some examples, if there are parameters 232 that cannot be directly mapped to inputs, the parameters 232 may be assigned default values (e.g., stored in memory circuitry 226) that are known to be broadly applicable in most situations.

If appropriate, after block 408, the test method creation process 400 identifies one or more parameters 232 (and/or parameter values) to be suggested to the user at block 410. In some examples, the parameter(s) 232 (and/or parameter value(s)) may be suggested if one or more parameters 232 (and/or parameter values) remain unidentified and/or unset after block 408. In some examples, a parameter 232 (and/or parameter value) may be suggested even if a parameter 232 (and/or parameter value) was set at block 408, if a suggested change in the parameter 232 (and/or parameter value) would save time, reduce the potential for error, and/or move the parameter 232 (and/or test method) into compliance with a particular standard.

In some examples, the test method creation process 400 identifies the suggested parameter(s) 232 based on one or more inputs received at blocks 402 and/or 406. For example, one of the user inputs at block 402 may identify a particular standard, and the test method creation process 400 may evaluate the parameters 232 in view of the standard and identify one or more parameters 232 that should be adjusted to meet the standard (e.g., in view of the material testing machine 102, other parameters 232, and/or other inputs).

In some examples, the test method creation process 400 identifies the suggested parameter(s) 232 based on one or more other present and/or prior parameters 232. For example, the test method creation process 400 may evaluate prior parameters 232 in view of a current specimen parameter 232 (e.g., indicating that the specimen 128 is a particular material), and identify one or more particular test parameters 232 as being most often/recently used in the past in conjunction with that specimen parameter 232.

In some examples, the test method creation process 400 may use a more complex analysis, where the test method creation process 400 attempts to identify, using prior parameters 232 and/or inputs (e.g., stored in the repositories 234), one or more patterns that match the current pattern of parameters 232 and/or inputs. In some examples, one or more machine learning algorithms (e.g., cluster analysis, K-nearest neighbor, etc.) may be used for the pattern matching. In some examples, the test method creation process 400 may additionally (or alternatively) identify the suggested parameter(s) 232 based on prior test results (e.g., stored in the repositories 234).

In some examples, the suggested parameter(s) 232 identified at block 410 may be output to the user via the UI 204. In some examples, the test method creation process 400 may give an explanation as to why the suggestion is being made. In some examples, the suggested parameter(s) 232 may be used as the actual parameter(s) 232 (e.g., in response to an input received via the UI 204 accepting the suggestion).

In the example of FIG. 4, after block 410, the test method creation process 400 proceeds to block 412, where the test method creation process 400 generates a material testing workflow 300 using the parameters 232 identified at blocks 410 and/or 408 (and/or the inputs received at blocks 402 and/or 406). In some examples, in generating the material testing workflow 300 using the parameters 232, the test method creation process 400 may define a test method.

After block 412, the test method creation process 400 generates one or more documents based on the received inputs, the current parameters 232 (and/or parameter values), and/or the generated material testing workflow 300 (and/or test method) at block 414. For example, the document(s) may provide instructions on how to use the material testing workflow 300, and/or how to setup, execute, and/or analyze results of the test method. Such a document may be useful for an operator tasked with using the generated material testing workflow 300, and/or setting up, executing, and/or analyzing results of the test method.

After block 414, the test method creation process 400 generates and/or provides a tutorial (e.g., via the UI 204) at block 416. In some examples, the tutorial may instruct a user how to setup the material testing machine 102, operate the material testing machine 102, progress through the material testing workflow 300, and/or setup, execute, and/or analyze the results of the test method (e.g., via the material testing workflow 300). In some examples, the tutorial may provide access to a human or automated helper to provide guidance on how to setup the material testing machine 102, operate the material testing machine 102, progress through the material testing workflow 300, and/or setup, execute, and/or analyze the results of the test method.

In the example of FIG. 4, after block 416, the test method creation process 400 proceeds to block 418 where the test method creation process 400 allows a user to use and/or progress through the generated material testing workflow 300. By allowing the user to progress through the workflow 300, the user is allowed to see and/or modify any desired parameters 232. For example, the user may use the test method creation process 400 to easily set values for many for the parameters 232, but be aware of a few parameters 232 that must be set a certain way to define the test method and/or analyze the test results as desired. In such an example, the user may manually customize the parameters 232 to the extent desired.

In some examples, block 418 may include executing the test method defined by the identified parameters 232 of the workflow 300 using (and/or via communication with) the material testing machine 102. For example, a user may use the test method execution state(s) 306 of the workflow 300 to execute the test method using the set parameters 232. Thereafter, at block 420, the results of the test method are compiled and/or output via one or more reports (e.g., via post-test states 308, 310, and/or 316 of the workflow 300).

In some examples, the report(s) may be provided over the network 220 (e.g., internet) to a remote user using the remote interface 230. In such examples, the report may take the form of a website, web platform, or other online interface.

While blocks 418 and 420 are shown as being part of the test method creation process 400 for the purposes of completeness and understanding, persons of ordinary skill will understand that blocks 418 and 420 may be undertaken outside of the test method creation process 400. As shown, the test method creation process 400 ends after block 420.

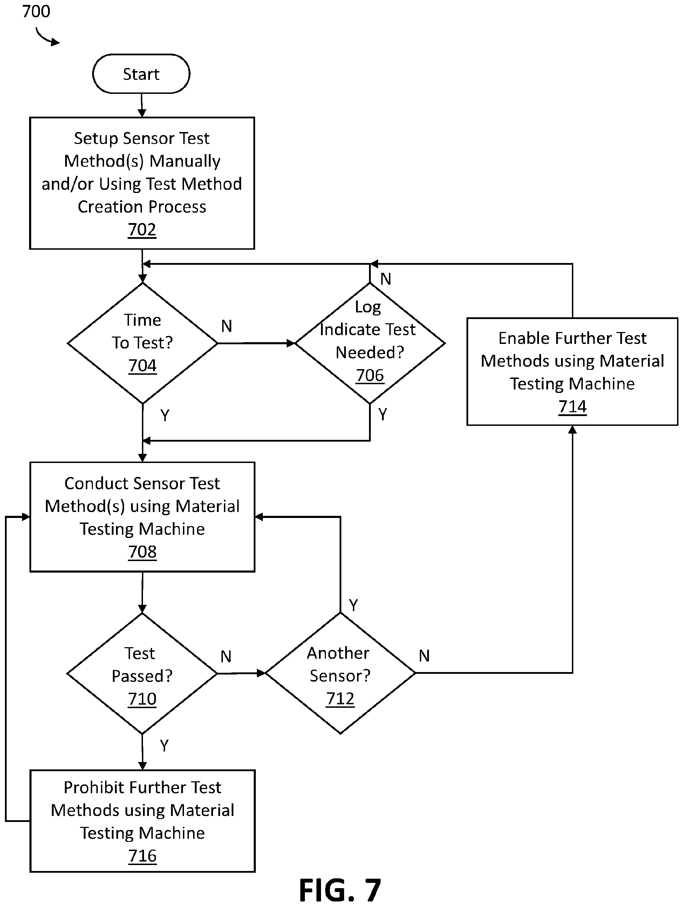

FIG. 7 is a flow diagram showing example operation of the sensor testing process 700. In some examples, during the sensor testing process 700, one or more sensor test methods for testing the test sensor(s) 126 of the material testing machine 102 are setup and/or executed. In some examples, by periodically testing the test sensors 126 via test methods, the sensor testing process 700 ensures that the test sensors 126 are functioning correctly, and have not been compromised due to certain issues, such as, for example sensor drift, overloading, poor calibration, and/or other issues impacting the reliability, accuracy, and/or correct functioning of the test sensor(s) 126. In some examples, further test methods (e.g., of specimens 128) may be prohibited from executing if the test results indicate that one or more of the sensors 126 are malfunctioning. This prohibition may ensure that the tests conducted using the material testing machine remain reliable and usable, rather than being rendered untrustworthy due to malfunctioning test sensors. In some examples, the prohibition may be ended manually and/or when the test results indicate that all of the sensors 126 are functioning correctly.

In some examples, before using and/or progressing through the sensor testing process 700, a user may be required to login and/or be authenticated, as discussed above. While the sensor testing process 700 is sometimes described below as conducting certain actions for the sake of understanding, it should be understood that one or more of the above described components of the material testing system 100 (e.g., the processing circuitry 224, UI 204, etc.) may undertake the actions on behalf (and/or according to instructions) of the sensor testing process 700.

In the example of FIG. 7, the sensor testing process 700 begins at block 702, where the sensor testing process 700 sets up one or more test methods to test the test sensor(s) 126 of the material testing machine 102. In some examples, one or more of the test methods may be setup using the material testing workflow 300. In some examples, one or more of the test methods may be setup and/or created using the creation process 400.

In some examples, each test sensor 126 of the material testing machine 102 is associated with its own unique test method. In some examples, a particular test sensor 126 may be associated with a particular test method by specifying (e.g., via the test parameter(s) 232) that the particular test sensor 126 is the one being used for the testing.

In some examples, the specimen 128 in a test method for a test sensor 126 may be an item of a known weight (e.g., specified as part of the sample/specimen parameter(s) 232). Thereby, the sensor testing process 700 may determine whether or not a test sensor 126 is functioning correctly by comparing the weight (and/or force) measurements of the test sensor 126 during the test method to the known weight (and/or force). In some examples, the test sensor 126 may be determined to have passed the test if the measured weight is the same as, or within some tolerance of, the known weight. In some examples, the tolerance may be specified as part of the analysis parameter(s) 232.

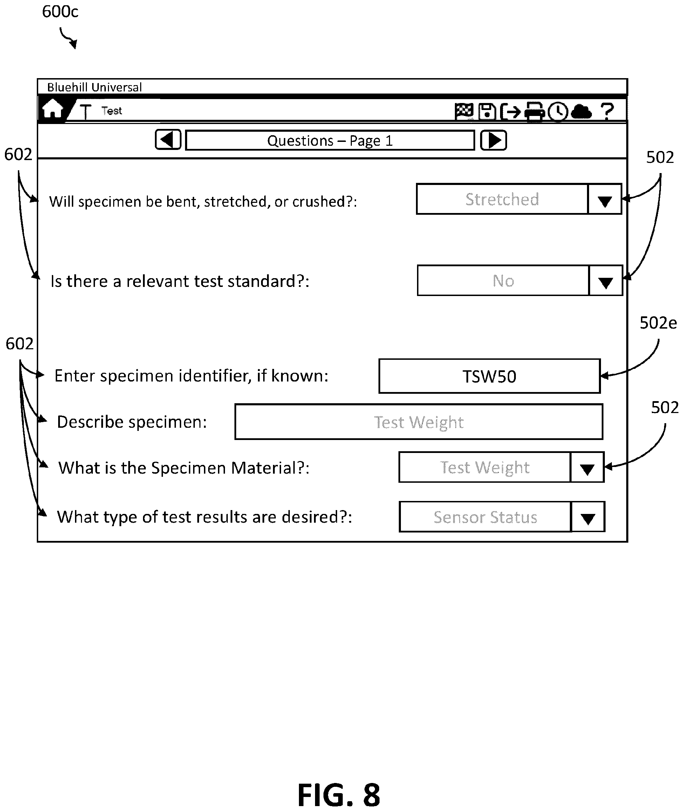

FIG. 8 shows an example creation screen 600c that might be shown when using the creation process 400 to create a test method for testing a test sensor 126 of the material testing machine 102. As shown, the creation screen 600c has similar prompts 602 as the creation screen 600a of FIG. 6a. However, the information populating the input fields 502 of the creation screen 600c is different than that the creation screen 600a.

In the example of FIG. 8, the information populating the input fields 502 in the creation screen 600c is tailored towards creating a test method for testing a test sensor 126 of the material testing machine 102. In particular, the creation screen 600c shows information in the input field 502e identifying the specimen 128 as corresponding to identifier TSW50. In some examples, this identifier may correspond to an item of a known (e.g., 50 pound) weight used as the specimen 128 to test the test sensor(s) 126.

In the example of FIG. 8, suggested inputs populate the other input fields 502 of the creation screen 600c. In some examples, the creation process 400 may identify the suggested inputs based on the identifier of the specimen 128 in the input field 502c. For example, one or more of the data repositories 234 may store one or more data structures mapping identifiers of specimens 128 with other information pertaining to the specimen 128, test method, and/or result analysis. In some examples, an identifier of the specimen 128 may be considered an input and/or specimen parameter 232.

In some examples, one or more other parameters 232 not traditionally part of the material testing workflow 300 may also be provided at block 702. For example, the sensor testing process 700 may prompt for and/or receive input specifying one or more time parameters 232 representative of a time period, frequency, number of intervening test methods/samples/specimens 128, and/or other variable indicating how often the test method(s) should execute (e.g., for all test sensors 126 or for a particular test sensor 126).

As another example, the sensor testing process 700 may prompt for and/or receive input specifying one or more log parameters 232 representative of one or more conditions that might trigger the need for the test sensor(s) 126 to be tested via the appropriate test method(s). In some examples, the material testing system 100 may keep a data log (e.g., via one or more of the data repositories 234) recording measurements of the test sensor(s) 126 (as well as other data) from prior sensor measurements, prior test results, prior test methods, and/or prior material testing workflows 300. In some examples, the sensor testing process 700 may analyze the logged data to determine whether any of the conditions represented by the log parameters 232 have been met, in order to determine whether there is need for the sensor(s) 126 to be tested via the appropriate test method(s).

Examples of conditions represented by the log parameters 232 may include certain data trends, such as, for example, sequences of test method measurements (e.g., made by test sensors 126) showing potential sensor drift, sensor overload, and/or poor calibration (e.g., in view of other measurements by the same test sensor 126 and/or by other test sensors 126 during prior test methods). Another example might include one or more thresholds beyond a sensor measurement should never (or very rarely) reach.

In the example of FIG. 7, after block 702, the sensor testing process 700 proceeds to block 704, where the sensor testing process 700 determines whether the time parameter 232 indicates that it is time for the sensor test method(s) to be executed. In some examples, when determining whether it is time for the sensor test method(s) to be executed, the sensor testing process 700 may further consider data from a (e.g., date/time/test method/sample/specimen 128) counter of the computing device 202 (e.g., implemented via processing circuitry 224 and/or machine readable instructions in memory circuitry 226). If the sensor testing process 700 determines it is time for the sensor test method(s) to be executed, the sensor testing process 700 proceeds to block 708, where the sensor testing process 700 executes the test method(s) setup at block 702. If, however, the sensor testing process 700 determines it is not yet time for the sensor test method(s) to be executed, the sensor testing process 700 proceeds to block 706.

At block 706, the sensor testing process 700 analyzes the data log (e.g., stored via the data repositories 234) to see if there is evidence of any of the conditions represented by the log parameters 232 being met. If no such evidence is uncovered, the sensor testing process 700 returns to the test time determination block 704. However, if the sensor testing process 700 does find evidence of one or more of the conditions represented by the log parameters 232 being met, the sensor testing process 700 proceeds to block 708, where the sensor testing process 700 executes the sensor test method(s).

While shown in FIG. 7 and discussed above as occurring in a particular order, in some examples, the order of blocks 704 and 706 may be switched, such that block 706 occurs first, and block 704 occurs second (e.g., if the result of block 706 is no). In either case, if the result of either of blocks 704 and/or 706 is a yes, the sensor testing process 700 proceeds next to block 708, where the sensor testing process 700 executes the sensor test method(s).

In some examples, the computing device 202 communicates with the material testing machine 102 (e.g., via network interfaces 218) to execute the sensor test method(s), as discussed above. In some examples, execution of the sensor test method(s) may involve using the material testing machine 102 according to the (e.g., test/specimen/sample) parameters 232 set by the creation process 400 and/or during the material testing workflow 300, as discussed above. While shown as being automatically executed by the sensor testing process 700, in some examples, the sensor test method(s) may be executed manually at any time by a user (e.g. via the material testing workflow 300).

In the example of FIG. 7, after executing a sensor test method at block 708, the sensor testing process 700 proceeds to block 710 where the sensor testing process 700 analyzes the test results of the sensor test method to determine whether the particular test sensor 126 being tested by the test method passed the test. In some examples, the analysis of the test results may include comparing one or more force measurements of the test sensor 126, and/or one or more statistical representation (e.g., mean, mode, median, etc.) of the one or more force measurements, with one or more expected measurements and/or one or more threshold tolerances (e.g., represented via analysis parameters 232). For example, the sensor testing process 700 may compare an average force measurement of a test sensor 126 with an expected force measurement, and determine the test sensor 126 passes the test method because, though not exactly the same, the average force measurement is within a tolerable range (e.g., +/- 2 pounds) of the expected force measurement.

As shown, the sensor testing process 700 proceeds to block 712 after block 710 if the sensor testing process 700 determines the test sensor 126 passes the test method. At block 712, the sensor testing process 700 determines whether there is another test sensor 126 of the material testing machine 102 that needs to be (or has yet to be) tested (and/or whether there is another associated test method that needs to be or has yet to be executed). If so, the sensor testing process 700 returns to block 708, where the next test method is executed.

If all the test sensors 126 are determined to have passed the test method(s) at block 710, and no further test sensors 126 are found to need testing at block 712, then the sensor testing process 700 proceeds to block 714 where the sensor testing process 700 enables further test methods to be conducted (e.g., on specimens 128 that need to be tested) using the material testing machine 102. In some examples, a user may also manually enable further test methods to be conducted. After the enablement at block 714, the sensor testing process 700 returns to block 704 (though, in some examples, the sensor testing process 700 may instead return to block 702, or end).

However, if a test sensor 126 is found not to have passed the test method at block 710, the sensor testing process 700 proceeds to block 716, where further test methods are prohibited from executing using the material testing machine 102. In some examples, this prohibition may ensure that the test results of other test methods are reliable and not thrown off by malfunctioning test sensor(s) 126. In some examples, the sensor testing process 700 may only proceed to block 716 if a certain number (e.g., stored in memory circuitry 226) of test sensors 126 fail their test methods. While shown as returning to block 708 after block 716, in some examples, the sensor testing process 700 may instead end after block 716.

The disclosed sensor testing process 700 allows for testing of one or more test sensors 126 of the material testing machine 102 to ensure each test sensor 126 is functioning correctly. The testing may be conducted manually, periodically, and/or in response to some indication that a test sensor 126 may be malfunctioning. In some examples, further test methods (e.g., not conducted to test the test sensor(s) 126) may be prohibited from executing if the test results indicate that one or more of the sensors 126 are malfunctioning, and/or until the test results indicate that all of the sensors 126 are functioning correctly. This prohibition may ensure that the test results of other test methods are reliable and usable, rather than being rendered untrustworthy due to malfunctioning test sensors 126.

The present methods and/or systems may be realized in hardware, software, or a combination of hardware and software. The present methods and/or systems may be realized in a centralized fashion in at least one computing system, or in a distributed fashion where different elements are spread across several interconnected computing or cloud systems. Any kind of computing system or other apparatus adapted for carrying out the methods described herein is suited. A typical combination of hardware and software may be a general-purpose computing system with a program or other code that, when being loaded and executed, controls the computing system such that it carries out the methods described herein. Another typical implementation may comprise an application specific integrated circuit or chip. Some implementations may comprise a non-transitory machine-readable (e.g., computer readable) medium (e.g., FLASH drive, optical disk, magnetic storage disk, or the like) having stored thereon one or more lines of code executable by a machine, thereby causing the machine to perform processes as described herein.

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. Therefore, it is intended that the present method and/or system not be limited to the particular implementations disclosed, but that the present method and/or system will include all implementations falling within the scope of the appended claims.

As used herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z".

As utilized herein, the terms "e.g.," and "for example" set off lists of one or more non-limiting examples, instances, or illustrations.

As used herein, the terms "coupled," "coupled to," and "coupled with," each mean a structural and/or electrical connection, whether attached, affixed, connected, joined, fastened, linked, and/or otherwise secured. As used herein, the term "attach" means to affix, couple, connect, join, fasten, link, and/or otherwise secure. As used herein, the term "connect" means to attach, affix, couple, join, fasten, link, and/or otherwise secure.

As used herein the terms "circuits" and "circuitry" refer to physical electronic components (i.e., hardware) and any software and/or firmware ("code") which may configure the hardware, be executed by the hardware, and or otherwise be associated with the hardware. As used herein, for example, a particular processor and memory may comprise a first "circuit" when executing a first one or more lines of code and may comprise a second "circuit" when executing a second one or more lines of code. As utilized herein, circuitry is "operable" and/or "configured" to perform a function whenever the circuitry comprises the necessary hardware and/or code (if any is necessary) to perform the function, regardless of whether performance of the function is disabled or enabled (e.g., by a user-configurable setting, factory trim, etc.).

As used herein, a control circuit may include digital and/or analog circuitry, discrete and/or integrated circuitry, microprocessors, DSPs, etc., software, hardware and/or firmware, located on one or more boards, that form part or all of a controller, and/or are used to control a welding process, and/or a device such as a power source or wire feeder.

As used herein, the term "processor" means processing devices, apparatus, programs, circuits, components, systems, and subsystems, whether implemented in hardware, tangibly embodied software, or both, and whether or not it is programmable. The term "processor" as used herein includes, but is not limited to, one or more computing devices, hardwired circuits, signal-modifying devices and systems, devices and machines for controlling systems, central processing units, programmable devices and systems, field-programmable gate arrays, application-specific integrated circuits, systems on a chip, systems comprising discrete elements and/or circuits, state machines, virtual machines, data processors, processing facilities, and combinations of any of the foregoing. The processor may be, for example, any type of general purpose microprocessor or microcontroller, a digital signal processing (DSP) processor, an application-specific integrated circuit (ASIC), a graphic processing unit (GPU), a reduced instruction set computer (RISC) processor with an advanced RISC machine (ARM) core, etc. The processor may be coupled to, and/or integrated with a memory device.

As used, herein, the term "memory" and/or "memory device" means computer hardware or circuitry to store information for use by a processor and/or other digital device. The memory and/or memory device can be any suitable type of computer memory or any other type of electronic storage medium, such as, for example, read-only memory (ROM), random access memory (RAM), cache memory, compact disc read-only memory (CDROM), electro-optical memory, magneto-optical memory, programmable read-only memory (PROM), erasable programmable read-only memory (EPROM), electrically-erasable programmable read-only memory (EEPROM), a computer-readable medium, or the like. Memory can include, for example, a non-transitory memory, a non-transitory processor readable medium, a non-transitory computer readable medium, non-volatile memory, dynamic RAM (DRAM), volatile memory, ferroelectric RAM (FRAM), first-in-first-out (FIFO) memory, last-in-first-out (LIFO) memory, stack memory, non-volatile RAM (NVRAM), static RAM (SRAM), a cache, a buffer, a semiconductor memory, a magnetic memory, an optical memory, a flash memory, a flash card, a compact flash card, memory cards, secure digital memory cards, a microcard, a minicard, an expansion card, a smart card, a memory stick, a multimedia card, a picture card, flash storage, a subscriber identity module (SIM) card, a hard drive (HDD), a solid state drive (SSD), etc. The memory can be configured to store code, instructions, applications, software, firmware and/or data, and may be external, internal, or both with respect to the processor.

Certain embodiments of the invention are described in the following clauses:
Clause 1. A material testing system, comprising:
   a material testing machine, comprising a test sensor, a test actuator, and a test controller configured to control the test actuator; and
   a computing device configured for communication with the material testing machine, the computing device comprising processing circuitry configured to:
      execute a sensor test method using the material testing machine, the sensor test method comprising a method for testing the test sensor of the material testing machine,
      determine whether the test sensor of the material testing machine is operating correctly based on a test result of the sensor test method, and
      in response to determining the test sensor is not operating correctly, prohibiting a further test method from being executed using the material testing machine.
Clause 2. The system of clause 1, wherein determining whether the test sensor is operating correctly comprises determining whether a measurement of the test sensor during execution of the sensor test method is within a specified tolerance of an expected measurement, the test result comprising the measurement of the test sensor during execution of the sensor test method.
Clause 3. The system of clause 1, wherein the computing device further comprises memory circuitry storing a time parameter, the processing circuitry being further configured to: execute the sensor test method again after a time delay in response to determining the test sensor is operating correctly, the time delay being determined based on the time parameter stored in the memory circuitry.
Clause 4. The system of clause 1, wherein the sensor test method comprises a first sensor test method, the test result comprises a first test result, the test sensor comprises a first test sensor, the material testing machine further comprising a second test sensor, and the processing circuitry being further configured to:
   in response to determining the first test sensor is operating correctly, execute a second sensor test method using the material testing machine, and
   determine whether the second test sensor of the material testing machine is operating correctly based on a second test result of the second sensor test method.
Clause 5. The system of clause 4, wherein the processing circuitry is further configured to: in response to determining the second test sensor is operating correctly, successively execute an additional sensor test method for each additional test sensor of the material testing machine until each additional test sensor has been determined to be operating correctly, or an additional test sensor is determined to be operating incorrectly.
Clause 6. The system of clause 1, further comprising:
   a user interface configured to:
      output input prompts regarding the sensor test method, and
      receive one or more user inputs responding to the input prompts,
   the processing circuitry being further configured to:
      identify one or more test parameters of the sensor test method based on the one or more inputs, and
      generate the sensor test method based on the one or more test parameters.
Clause 7. The system of clause 1, wherein the processing circuitry is further configured to determine whether there is an indication that the test sensor of the material testing machine is not operating correctly based on an event record stored in memory circuitry of the computing device, the event record comprising a log of events that occur during setup, execution, or analysis of a test method, wherein the sensor test method is executed in response to determining that there is an indication that the test sensor is not operating correctly.
8. A non-transitory computer readable medium comprising machine readable instructions which, when executed by a processor, causes the processor to:
   execute a sensor test method using a material testing machine, the material testing machine comprising a test sensor, a test actuator, and a test controller configured to control the test actuator, the sensor test method comprising a method for testing the test sensor of the material testing machine;
   determine whether the test sensor of the material testing machine is operating correctly based on a test result of the sensor test method; and
   in response to determining the test sensor is not operating correctly, prohibit a further test method from being executed using the material testing machine.
Clause 9. The non-transitory computer readable medium of clause 8, wherein determining whether the test sensor is operating correctly comprises determining whether a measurement of the test sensor during execution of the sensor test method is within a specified tolerance of an expected measurement, the test result comprising the measurement of the test sensor during execution of the sensor test method.
Clause 10. The non-transitory computer readable medium of clause 8, further comprising a time parameter, the machine readable instructions, when executed by the processor, further causing the processor to execute the sensor test method again after a time delay in response to determining the test sensor is operating correctly, the time delay being determined based on the time parameter.
Clause 11. The non-transitory computer readable medium of clause 8, wherein the sensor test method comprises a first sensor test method, the test result comprises a first test result, the test sensor comprises a first test sensor, the material testing machine further comprising a second test sensor, and the machine readable instructions, when executed by the processor, further causing the processor to:
   in response to determining the first test sensor is operating correctly, execute a second sensor test method using the material testing machine; and
   determine whether the second test sensor of the material testing machine is operating correctly based on a second test result of the second sensor test method.
Clause 12. The non-transitory computer readable medium of clause 11, wherein the machine readable instructions, when executed by the processor, further cause the processor to: in response to determining the second test sensor is operating correctly, successively execute an additional sensor test method for each additional test sensor of the material testing machine until each additional test sensor has been determined to be operating correctly, or an additional test sensor is determined to be operating incorrectly.
Clause 13. The non-transitory computer readable medium of clause 8, wherein the machine readable instructions, when executed by the processor, further cause the processor to:
   output, via a user interface, input prompts regarding the sensor test method;
   receive, via the user interface, one or more user inputs responding to the input prompts;
   identify one or more test parameters of the sensor test method based on the one or more inputs; and
   generate the sensor test method based on the one or more test parameters.
Clause 14. The non-transitory computer readable medium of clause 8, wherein the machine readable instructions, when executed by the processor, further cause the processor to: determine whether there is an indication that the test sensor of the material testing machine is not operating correctly based on an event record stored in memory circuitry of the computing device, the event record comprising a log of events that occur during setup, execution, or analysis of a test method, wherein the sensor test method is executed in response to determining that there is an indication that the test sensor is not operating correctly.
Clause 15. A method, comprising:
   executing a sensor test method using a material testing machine, the material testing machine comprising a test sensor, a test actuator, and a test controller configured to control the test actuator, the sensor test method comprising a method for testing the test sensor of the material testing machine;
   determining, via processing circuitry of a computing device, whether the test sensor of the material testing machine is operating correctly based on a test result of the sensor test method; and
   in response to determining the test sensor is not operating correctly, prohibiting a further test method from being executed using the material testing machine.
Clause 16. The method of clause 15, wherein determining whether the test sensor is operating correctly comprises determining whether a measurement of the test sensor during execution of the sensor test method is within a specified tolerance of an expected measurement, the test result comprising the measurement of the test sensor during execution of the sensor test method.
Clause 17. The method of clause 15, further comprising executing the sensor test method again after a time delay in response to determining the test sensor is operating correctly, the time delay being determined based on a time parameter stored in memory circuitry of the computing device.
Clause 18. The method of clause 15, wherein the sensor test method comprises a first sensor test method, the test result comprises a first test result, the test sensor comprises a first test sensor, the material testing machine further comprising a second test sensor, and the method further comprising:
   in response to determining the first test sensor is operating correctly, executing a second sensor test method using the material testing machine; and
   determining, via the processing circuitry, whether the second test sensor of the material testing machine is operating correctly based on a second test result of the second sensor test method.
Clause 19. The method of clause 18, further comprising: in response to determining the second test sensor is operating correctly, successively executing an additional sensor test method for each additional test sensor of the material testing machine until each additional test sensor has been determined to be operating correctly, or an additional test sensor is determined to be operating incorrectly.
Clause 20. The method of clause 15, further comprising determining, via the processing circuitry, whether there is an indication that the test sensor of the material testing machine is not operating correctly based on an event record stored in memory circuitry of the computing device, the event record comprising a log of events that occur during setup, execution, or analysis of a test method, wherein the sensor test method is executed in response to determining that there is an indication that the test sensor is not operating correctly.

## Claims

1. A material testing system, comprising:
a material testing machine, comprising a test sensor, a test actuator, and a test controller configured to control the test actuator; and
a computing device configured for communication with the material testing machine, the computing device comprising processing circuitry configured to:
execute a sensor test method using the material testing machine, the sensor test method comprising a method for testing the test sensor of the material testing machine,
determine whether the test sensor of the material testing machine is operating correctly based on a test result of the sensor test method, and
in response to determining the test sensor is not operating correctly, prohibiting a further test method from being executed using the material testing machine.

2. The system of claim 1, wherein determining whether the test sensor is operating correctly comprises determining whether a measurement of the test sensor during execution of the sensor test method is within a specified tolerance of an expected measurement, the test result comprising the measurement of the test sensor during execution of the sensor test method.

3. The system of claim 1, wherein the computing device further comprises memory circuitry storing a time parameter, the processing circuitry being further configured to: execute the sensor test method again after a time delay in response to determining the test sensor is operating correctly, the time delay being determined based on the time parameter stored in the memory circuitry.

4. The system of claim 1, wherein the sensor test method comprises a first sensor test method, the test result comprises a first test result, the test sensor comprises a first test sensor, the material testing machine further comprising a second test sensor, and the processing circuitry being further configured to:
in response to determining the first test sensor is operating correctly, execute a second sensor test method using the material testing machine, and
determine whether the second test sensor of the material testing machine is operating correctly based on a second test result of the second sensor test method, and optionally
wherein the processing circuitry is further configured to: in response to determining the second test sensor is operating correctly, successively execute an additional sensor test method for each additional test sensor of the material testing machine until each additional test sensor has been determined to be operating correctly, or an additional test sensor is determined to be operating incorrectly.

5. The system of claim 1, further comprising:
a user interface configured to:
output input prompts regarding the sensor test method, and
receive one or more user inputs responding to the input prompts,
the processing circuitry being further configured to:
identify one or more test parameters of the sensor test method based on the one or more inputs, and
generate the sensor test method based on the one or more test parameters.

6. The system of claim 1, wherein the processing circuitry is further configured to determine whether there is an indication that the test sensor of the material testing machine is not operating correctly based on an event record stored in memory circuitry of the computing device, the event record comprising a log of events that occur during setup, execution, or analysis of a test method, wherein the sensor test method is executed in response to determining that there is an indication that the test sensor is not operating correctly.

7. A non-transitory computer readable medium comprising machine readable instructions which, when executed by a processor, causes the processor to:
execute a sensor test method using a material testing machine, the material testing machine comprising a test sensor, a test actuator, and a test controller configured to control the test actuator, the sensor test method comprising a method for testing the test sensor of the material testing machine;
determine whether the test sensor of the material testing machine is operating correctly based on a test result of the sensor test method; and
in response to determining the test sensor is not operating correctly, prohibit a further test method from being executed using the material testing machine.

8. The non-transitory computer readable medium of claim 7, wherein determining whether the test sensor is operating correctly comprises determining whether a measurement of the test sensor during execution of the sensor test method is within a specified tolerance of an expected measurement, the test result comprising the measurement of the test sensor during execution of the sensor test method, or
wherein the non-transitory computer readable medium further comprises a time parameter, the machine readable instructions, when executed by the processor, further causing the processor to execute the sensor test method again after a time delay in response to determining the test sensor is operating correctly, the time delay being determined based on the time parameter.

9. The non-transitory computer readable medium of claim 7, wherein the sensor test method comprises a first sensor test method, the test result comprises a first test result, the test sensor comprises a first test sensor, the material testing machine further comprising a second test sensor, and the machine readable instructions, when executed by the processor, further causing the processor to:
in response to determining the first test sensor is operating correctly, execute a second sensor test method using the material testing machine; and
determine whether the second test sensor of the material testing machine is operating correctly based on a second test result of the second sensor test method, and optionally wherein the machine readable instructions, when executed by the processor, further cause the processor to: in response to determining the second test sensor is operating correctly, successively execute an additional sensor test method for each additional test sensor of the material testing machine until each additional test sensor has been determined to be operating correctly, or an additional test sensor is determined to be operating incorrectly.

10. The non-transitory computer readable medium of claim 7, wherein the machine readable instructions, when executed by the processor, further cause the processor to:
output, via a user interface, input prompts regarding the sensor test method;
receive, via the user interface, one or more user inputs responding to the input prompts;
identify one or more test parameters of the sensor test method based on the one or more inputs; and
generate the sensor test method based on the one or more test parameters.

11. The non-transitory computer readable medium of claim 7, wherein the machine readable instructions, when executed by the processor, further cause the processor to: determine whether there is an indication that the test sensor of the material testing machine is not operating correctly based on an event record stored in memory circuitry of the computing device, the event record comprising a log of events that occur during setup, execution, or analysis of a test method, wherein the sensor test method is executed in response to determining that there is an indication that the test sensor is not operating correctly.

12. A method, comprising:
executing a sensor test method using a material testing machine, the material testing machine comprising a test sensor, a test actuator, and a test controller configured to control the test actuator, the sensor test method comprising a method for testing the test sensor of the material testing machine;
determining, via processing circuitry of a computing device, whether the test sensor of the material testing machine is operating correctly based on a test result of the sensor test method; and
in response to determining the test sensor is not operating correctly, prohibiting a further test method from being executed using the material testing machine.

13. The method of claim 12, wherein determining whether the test sensor is operating correctly comprises determining whether a measurement of the test sensor during execution of the sensor test method is within a specified tolerance of an expected measurement, the test result comprising the measurement of the test sensor during execution of the sensor test method, or
wherein the method further comprises executing the sensor test method again after a time delay in response to determining the test sensor is operating correctly, the time delay being determined based on a time parameter stored in memory circuitry of the computing device.

14. The method of claim 12, wherein the sensor test method comprises a first sensor test method, the test result comprises a first test result, the test sensor comprises a first test sensor, the material testing machine further comprising a second test sensor, and the method further comprising:
in response to determining the first test sensor is operating correctly, executing a second sensor test method using the material testing machine; and
determining, via the processing circuitry, whether the second test sensor of the material testing machine is operating correctly based on a second test result of the second sensor test method, and optionally
wherein the method further comprises: in response to determining the second test sensor is operating correctly, successively executing an additional sensor test method for each additional test sensor of the material testing machine until each additional test sensor has been determined to be operating correctly, or an additional test sensor is determined to be operating incorrectly.

15. The method of claim 12, further comprising determining, via the processing circuitry, whether there is an indication that the test sensor of the material testing machine is not operating correctly based on an event record stored in memory circuitry of the computing device, the event record comprising a log of events that occur during setup, execution, or analysis of a test method, wherein the sensor test method is executed in response to determining that there is an indication that the test sensor is not operating correctly.
